# EUROPEAN PATENT APPLICATION

(11) **EP 4 556 159 A1**
(43) Date of publication of application: **21.05.2025**
(21) Application number: 23838828.4
(22) Date of filing: 06.07.2023
(51) Int. Cl.: B23Q 3/155

(54) **TOOL MAGAZINE AND TOOL CHANGING METHOD FOR BLADED DISK MACHINING CENTER**

(30) Priority: 11.07.2022 CN 202210813165
(71) Applicant: Kede Numerical Control Co., Ltd., Dalian, Liaoning 116000 (CN)
(72) Inventor: CHEN, Hu, Dalian, Liaoning 116000 (CN); YIN, Shuqiang, Dalian, Liaoning 116000 (CN); REN, Zhihui, Dalian, Liaoning 116000 (CN); HE, Xingjian, Dalian, Liaoning 116000 (CN); WANG, Lianyang, Dalian, Liaoning 116000 (CN); GONG, Xinglin, Dalian, Liaoning 116000 (CN); DENG, Xin, Dalian, Liaoning 116000 (CN)
(74) Representative: JD&P Patent Attorneys Joanna Dargiewicz & Partners
(86) International application number: PCT/CN2023/105990
(87) International publication number: WO 2024/012336

(57) **Abstract**

The present invention provides a blade disc machining center tool magazine including a T2 axis rotation assembly; and an A axis rotation assembly, wherein the T2 axis rotation assembly can move along a T1 axis, and when an axis of a swing head is parallel to a plane where a tool disc is located, or is in the plane where the tool disc is located, the axis of the swing head is parallel to or coincides with a linear axis of the tool disc. The present invention also provides a blade disc machining center tool changing method that does not require the use of complex equipment such as manipulators. A tool changing process can be completely implemented by relying on the mutual cooperation of a Z axis, a Y axis and the T1 axis of a machine tool. In addition, during the tool changing process, the grabbing and releasing of a tool can be implemented simply by the cooperation of a single linear axis movement, which greatly reduces the complexity of a tool changing action, makes a tool changing logic of the machine tool more concise and easy to operate, is simple in structure, has good stability, and is easy to maintain.

## Description

### Technical Field

The present invention relates to the field of machine tool machining, and particularly, to a blade disc machining center tool magazine and a tool changing method.

### Background Art

In a fine machining process of a blade disc, in order to machine a shape of a blade, there will be a certain degree of rotation between a tool of a blade disc machining center and a workpiece being machined. This rotation is a compound of relative motions of the workpiece and the tool in multiple dimensions.

In order to better machine the blade disc and ensure that the movement speed and acceleration of each physical shaft are kept in a lower range relative to a machine tool of ordinary structure when the machine tool performs a five axis rotary tool center (Rotation Tool Center Point) machining action, the blade disc machining center adopts an angled swing head and sets a tool tip point on a swing head rotation axis to ensure that large speed and acceleration of a linear axis will not be generated during the rotation machining of the swing head.

In order to achieve tool changing, an existing machine tool needs to additionally be equipped with a tool changing mechanism such as a manipulator. Tool changing is achieved through a movement of the tool changing mechanism itself or a coordinated movement of the tool changing mechanism and the machine tool. Adding a tool changing mechanism such as a manipulator will increase the manufacturing cost of the machine tool and occupy a larger space. Moreover, due to the use of the angled swing head, there is a certain angle between the machine tool coordinate axes and the spindle axis as well as the tool axis. In order to cooperate with the angled swing head, this tool changing method has high requirements on the installation position and posture of the manipulator. It is necessary to make the tool axis in the tool magazine, the spindle axis and the manipulator grasping tool axis parallel or coincident, and thus, it is difficult to accurately control the tool changing action, the tool changing logic is complex, and the tool changing action is cumbersome, which is not conducive to high-efficiency and high-precision machining.

### Summary of Invention

The present invention provides a blade disc machining center tool magazine and a tool changing method to solve the above problems.

The blade disc machining center tool magazine includes: a T1 linear axis assembly; a T2 axis rotation assembly; and an A axis rotation assembly, wherein the T1 linear axis assembly is used to drive the T2 axis rotation assembly to perform linear motion, the T2 axis rotation assembly is used to drive a tool disc to perform rotary motion, the A axis rotation assembly is used to drive a swing head mounted with a tool to perform rotary motion, and
when an axis of the swing head is parallel to a plane where the tool disc is located, or is in the plane where the tool disc is located, the axis of the swing head is parallel to or coincides with a linear axis of the tool disc.

Further, the T2 axis rotation assembly is arranged on a tool magazine base, the tool magazine base is arranged on one side of a bed, another side of the bed is provided with a column capable of moving along a Z axis, a saddle capable of moving along a Y axis is provided on the column, the A axis rotation assembly is provided on the saddle, a workbench is provided on the bed, the workbench is arranged on the same side of the tool magazine base,
the tool magazine base has a mounting bevel, and the T2 axis rotation assembly is arranged on the mounting bevel, and is capable of moving along the mounting bevel.

Further, the T2 axis rotation assembly includes a tool disc rotation fixed seat, the tool disc and a tool disc rotating motor, the tool disc rotation fixed seat is mounted on the mounting bevel, the tool disc is rotatably mounted on the tool disc rotation fixed seat, the tool disc rotating motor is fixed to the tool disc rotation fixed seat through a motor seat, the tool disc is coaxially fixed with a driven gear, the driven gear is meshed with a driving gear, and the tool disc rotating motor is transmission-connected to the driving gear.

Further, the T1 linear axis assembly includes a drive motor and a guide rail arranged on the mounting bevel, the drive motor is connected to the T2 axis rotation assembly through a lead screw and a nut, and the T2 axis rotation assembly is mounted on the guide rail through a slider.

Further, the blade disc machining center tool magazine also includes a detection switch bracket, wherein one end of the detection switch bracket is fixed to the tool disc rotation fixed seat, another end of the detection switch bracket is provided with a detection switch, and the detection switch faces a tool provided on the tool disc.

Further, the T2 axis rotation assembly includes the tool disc, the tool disc is circumferentially provided with a tool clamp for clamping tools, axes of the tools intersect perpendicularly with an axis of the tool disc, and the tool clamp clamps the tools on both sides of an axial direction of the tool disc.

Further, an angle a between a T1 axis and a horizontal direction is 30°, 45° or 60°.

A blade disc machining center tool changing method utilizing the blade disc machining center tool magazine described above includes:
S1. moving the column along the Z axis, moving the saddle along the Y axis, and driving the swing head to rotate by the A axis rotation assembly so that the axis of the swing head to be mounted with the tool intersects perpendicularly with the axis of the tool disc and is coplanar with the axis of the tool;
S2. rotating the tool disc by the T2 axis rotation assembly so that the axis of the tool to be grabbed coincides with the axis of the swing head;
S3. moving the T2 axis rotation assembly along the T1 axis so that the swing head grabs the tool; and
S4. moving the column along the Z axis to separate the tool from the tool disc.

A blade disc machining center tool changing method utilizing the blade disc machining center tool magazine described above includes:
S1. moving the column along the Z axis, moving the saddle along the Y axis, and driving the swing head to rotate by the A axis rotation assembly so that the axis of the swing head mounted with the tool intersects perpendicularly with the axis of the tool disc and a distance between the axis of the swing head and the tool disc is greater than a distance between a tool installation opening on the tool disc and the tool disc;
S2. rotating the tool disc by the T2 axis rotation assembly so that an axis of the tool installation opening on the tool disc is parallel to the axis of the swing head;
S3. moving the T2 axis rotation assembly along the T1 axis so that the tool installation opening on the tool disc is aligned with the tool on the swing head;
S4. moving the column along the Z axis to load the tool into the tool disc; and
S5. releasing the tool from the swing head and moving the T2 axis rotation assembly along the T1 axis to separate the tool from the swing head.

The blade disc machining center tool magazine and the tool changing method according to the present invention do not need to use complex equipment such as a manipulator. The tool changing process can be completely implemented by relying on the mutual cooperation of the Z axis, Y axis and T1 axis of the machine tool, which greatly reduces the production cost, reduces the space occupied by the machine tool, is more conducive to the structural layout of the machine tool itself, and reduces the possibility of interference between the tool changing action and the machining action. Moreover, during the tool changing process, the grabbing and releasing of the tool can be implemented simply by the cooperation of a single linear axis movement. The tool changing can be implemented simply by the coincidence of the spindle axis and the tool axis in the tool magazine, which greatly reduces the complexity of the tool changing action, makes the tool changing logic of the machine tool more concise and easy to operate, is conducive to high-precision and high-efficiency machining, is simple in structure, has good stability, and is easy to maintain.

### Brief Description of Drawings

In order to illustrate the embodiments of the present invention or the technical solutions in the prior art more clearly, the following briefly introduces the accompanying drawings that need to be used in the description of the embodiments or the prior art. Obviously, the accompanying drawings in the following description are some embodiments of the present invention, and for a person skilled in the art, other drawings can also be obtained from these accompanying drawings without creative effort.
Fig. 1 is a schematic diagram of a blade disc machining center tool magazine structure according to an embodiment of the present invention.
Fig. 2 is an enlarged view of portion A in Fig. 1.
Fig. 3 is a side view of the blade disc machining center tool magazine structure according to the embodiment of the present invention.
Fig. 4 is a front view of the blade disc machining center tool magazine structure according to the embodiment of the present invention.
Fig. 5 is an enlarged view of portion B in Fig. 4.
Fig. 6 is a schematic diagram of each tool changing position of a spindle in a blade disc machining center tool changing method according to an embodiment of the present invention.

In the drawings: 1. swing head; 2. tool disc; 3. tool magazine base; 4. bed; 5. column; 6. saddle; 7. workbench; 8. tool disc rotation fixed seat; 9. tool disc rotating motor; 10. motor seat; 11. driven gear; 12. driving gear; 13. guide rail; 14. detection switch bracket; 15. detection switch; 16. tool clamp

### Description of Embodiments

In order to make the purposes, technical solutions and advantages of the embodiments of the present invention clearer, the technical solutions in the embodiments of the present invention will be clearly and completely described below with reference to the accompanying drawings in the embodiments of the present invention. Obviously, the embodiments to be described are some, but not all, embodiments of the present invention. Based on the embodiments of the present invention, all other embodiments obtained by a person skilled in the art without creative efforts are within the protection scope of the present invention.

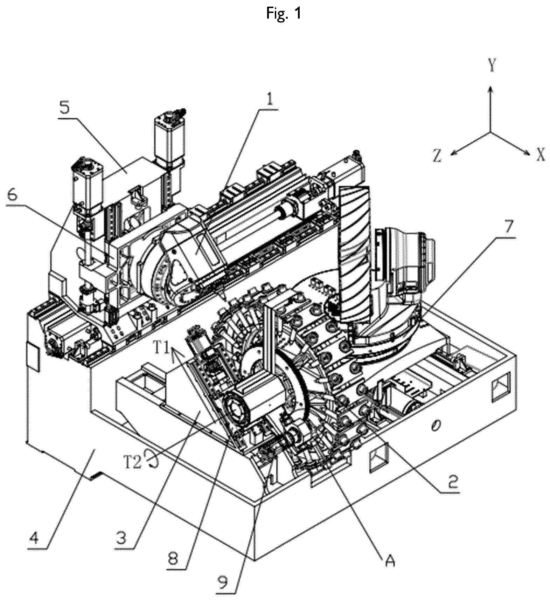

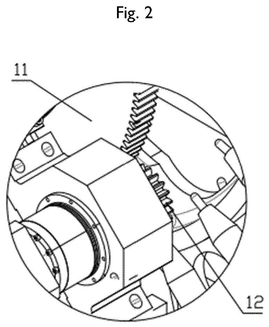

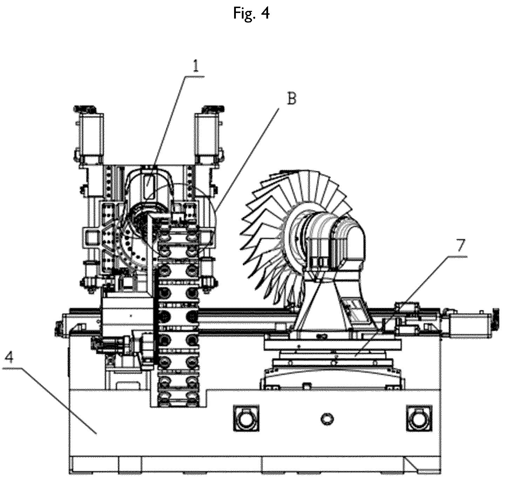

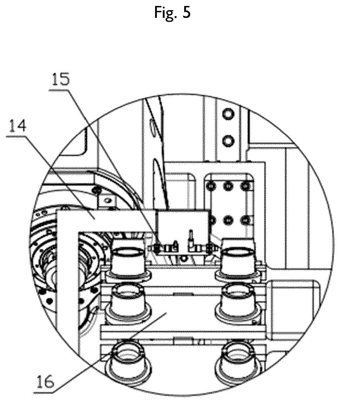

As shown in Figs. 1-5, the present embodiment discloses a blade disc machining center tool magazine including: a T2 axis rotation assembly; and an A axis rotation assembly, wherein the T2 axis rotation assembly is used to drive a tool disc 2 to perform rotary motion, the A axis rotation assembly is used to drive a swing head 1 mounted with a tool to perform rotary motion,
the T2 axis rotation assembly can move along a T1 axis, and when an axis of the swing head 1 is parallel to a plane where the tool disc 2 is located, or is in the plane where the tool disc 2 is located, the axis of the swing head 1 is parallel to or coincides with a linear axis of the tool disc.

The blade disc machining center tool magazine and tool changing method according to the present invention do not require the use of complex equipment such as manipulators. The tool changing process can be completely implemented by relying on the mutual cooperation of a Z axis, a Y axis and the T1 axis of the machine tool. In addition, during the tool changing process, the grabbing and releasing of the tool can be implemented simply by the cooperation of a single linear axis movement, which greatly reduces the complexity of the tool changing action, makes the tool changing logic of the machine tool more concise and easy to operate, is simple in structure, has good stability, and is easy to maintain.

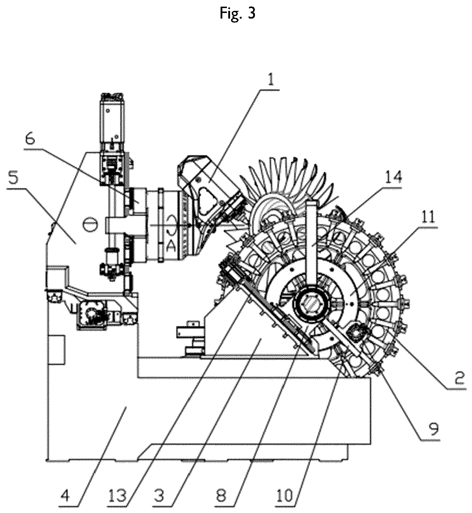

As shown in Fig. 3, the axis of the swing head 1 is parallel to the plane where the tool disc 2 is located, and the tool disc is provided with a tool. The axis of the tool coincides with the axis of the swing head 1. The T2 axis rotation assembly moves along the T1 axis and cooperates with a tool grabbing mechanism of the swing head to implement the grabbing and releasing of the tool without the need for multi-axis cooperation.

In the present embodiment, the T2 axis rotation assembly is arranged on a tool magazine base 3, the tool magazine base 3 is arranged on one side of a bed 4, another side of the bed 4 is provided with a column 5 capable of moving along the Z axis, a saddle 6 capable of moving along the Y axis is provided on the column 5, the A axis rotation assembly is provided on the saddle 6, a workbench 7 is provided on the bed 4, the workbench 7 is arranged on the same side of the tool magazine base 3,
the tool magazine base 3 has a mounting bevel, and the T2 axis rotation assembly is arranged on the mounting bevel, and is capable of moving along the mounting bevel.

In the present embodiment, the swing head can implement the movement in the Z axis direction and the Y axis direction through the column and the saddle, and the workbench 7 can move along an X axis on the bed 4, and the swing head does not need to move in the X axis direction. Through the rotation of the workbench, the movement of the swing head in the Z and Y directions and the swing of the swing head itself, multi-dimensional movement is compounded to complete the blade disc machining. The swing head does not need to move in the X axis direction, which is more conducive to the stability of the swing head during machining, easier to operate, and helps to optimize the machining logic. The tool changing process is achieved through the cooperation of the tool grabbing mechanism of the swing head and the T1 axis, which greatly reduces the actions and motion components involved in the traditional tool changing process, makes the entire tool changing logic concise and easy to operate, is simple in structure, and reduces the chance of installation and debugging errors.

In the present embodiment, the T2 axis rotation assembly includes a tool disc rotation fixed seat 8, the tool disc 2 and a tool disc rotating motor 9, the tool disc rotation fixed seat 8 is mounted on the mounting bevel, the tool disc 2 is rotatably mounted on the tool disc rotation fixed seat 8, the tool disc rotating motor 9 is fixed to the tool disc rotation fixed seat 8 through a motor seat 10, the tool disc 2 is coaxially fixed with a driven gear 11, the driven gear 11 is meshed with a driving gear 12, and the tool disc rotating motor 9 is transmission-connected to the driving gear 12. The T1 linear axis assembly includes a drive motor and a guide rail 13, the drive motor and the guide rail 13 arranged along the T1 axis are provided on the mounting bevel, the drive motor is connected to the T2 axis rotation assembly through a lead screw and a nut, and the T2 axis rotation assembly is mounted on the guide rail 13 through a slider.

The tool magazine base 3 is fixed on the bed 4, the tool magazine base 3 is a wedge-shaped structure with a top surface being an inclined surface, and the angle of the inclined surface is determined according to the angle of the swing head. The tool disc 2 is mounted on the tool disc rotation fixed seat 8 through a bearing, the motor seat 10 is also fixed on the tool disc rotation fixed seat 8 through a bracket, and the tool disc rotating motor 9 is fixed on the motor seat 10. The driven gear 11 is coaxially arranged with the tool disc 2, the diameter of the driven gear 11 is larger than the diameter of the driving gear 12, and the motor drives the tool disc 2 to rotate through the driving gear and the driven gear.

In the present embodiment, the blade disc machining center tool magazine also includes a detection switch bracket 14, wherein one end of the detection switch bracket 14 is fixed to the tool disc rotation fixed seat 8, another end of the detection switch bracket 14 is provided with a detection switch 15, and the detection switch 15 faces a tool provided on the tool disc 2.

The tool disc 2 is circumferentially provided with a tool clamp 16 for clamping tools, axes of the tools intersect perpendicularly with an axis of the tool disc 2, and the tool clamp 16 clamps the tools on both sides of an axial direction of the tool disc 2.

Tools are provided on both sides of the tool disc, which can double the number of tools mounted on the tool disc and improve the machining efficiency. When changing a tool, the swing head changes the tool from the side of the tool to be changed. The detection switch bracket is arranged in the radial direction of the tool disc, and the detection switch 15 is arranged between the tools on both sides. There are two detection switches 15, and the two detection switches 15 are respectively aligned with the tools on both sides to detect whether each tool clamp clamps a tool.

The angle between the swing head and the linear axis of the machine tool is 30°, 45° or 60°, and the angle a between the T1 axis and the horizontal direction is 30°, 45° or 60°. In the present embodiment, the angle a between the T1 axis and the horizontal direction is 45°.

The present invention also discloses a blade disc machining center tool changing method utilizing the blade disc machining center tool magazine described above, the method including:
S1. moving the column along the Z axis, moving the saddle along the Y axis, and driving the swing head to rotate by the A axis rotation assembly so that the axis of the swing head to be mounted with the tool intersects perpendicularly with the axis of the tool disc and is coplanar with the axis of the tool;
S2. rotating the tool disc by the T2 axis rotation assembly so that the axis of the tool to be grabbed coincides with the axis of the swing head; the tool to be grabbed is above the tool disc at this time;
S3. moving the T2 axis rotation assembly along the T1 axis so that the swing head grabs the tool; and
S4. moving the column along the Z axis to separate the tool from the tool disc.

When there is no tool clamped on the swing head, the above method is used to grab the tool.

The present invention also discloses a blade disc machining center tool changing method utilizing the blade disc machining center tool magazine described above, the method including:
S1. moving the column along the Z axis, moving the saddle along the Y axis, and driving the swing head to rotate by the A axis rotation assembly so that the axis of the swing head mounted with the tool intersects perpendicularly with the axis of the tool disc and a distance between the axis of the swing head and the tool disc is greater than a distance between a tool installation opening on the tool disc and the tool disc;
S2. rotating the tool disc by the T2 axis rotation assembly so that an axis of the tool installation opening on the tool disc is parallel to the axis of the swing head; the tool installation opening is above the the tool disc at this time;
S3. moving the T2 axis rotation assembly along the T1 axis so that the tool installation opening on the tool disc is aligned with the tool on the swing head;
S4. moving the column along the Z axis to load the tool into the tool disc; and
S5. releasing the tool from the swing head and moving the T2 axis rotation assembly along the T1 axis to separate the tool from the swing head.

When the tool is clamped on the swing head, the above method is used to put the tool back.

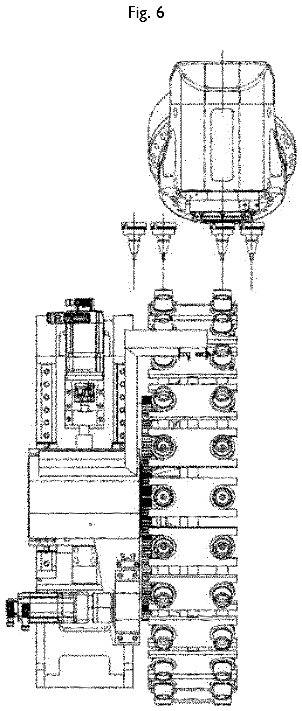

As shown in Fig. 6, four tool change positions are illustrated, the four tool change positions are used for tool changing on both sides of the tool disc.

The tool disc moves upward along the guide rail to a limit position, which is an automatic tool changing position. The tool disc moves downward along the guide rail to a limit position, which is a tool disc rotation position and a manual tool changing position.

Before the swing head grabs the tool or puts the tool back, the tool disc rotates around once, the tool holding status of each tool clamp on the tool disc is detected by the detection switch, and information on each position and status is recorded by a numerical control system. When changing the tool, when there is no tool clamped on the swing head, the tool can be directly grabbed through the aforementioned method, and when the tool is clamped on the swing head, the tool needs to be sent back to the tool magazine by the aforementioned method, and then the tool is re-grabbed.

The tool changing method according to the present embodiment only needs to use the Z axis and the Y axis of the machine tool to determine the position, use the T1 axis to make the tool magazine move linearly, and cooperate with the swing head to grab and release the tool. During the tool changing process, fast and accurate tool changing can be achieved without the need for combining two or more linear axes or interpolating movements, and thus, the tool changing action is simpler, the tool changing logic is more concise and easy to control, and the machining efficiency of the machine tool is higher.

Finally, it should be noted that: the above embodiments are only used to illustrate the technical solutions of the present invention, but not to limit them; although the present invention has been described in detail with reference to the foregoing embodiments, a person skilled in the art should understand that: the technical solutions described in the foregoing embodiments can still be modified, or some or all of the technical features thereof can be equivalently substituted. However, these modifications or substitutions do not make the essence of the corresponding technical solutions deviate from the scope of the technical solutions of the embodiments of the present invention.

## Claims

1. A blade disc machining center tool magazine comprising:
a T1 linear axis assembly;
a T2 axis rotation assembly; and
an A axis rotation assembly, wherein
the T1 linear axis assembly is used to drive the T2 axis rotation assembly to perform linear motion, the T2 axis rotation assembly is used to drive a tool disc (2) to perform rotary motion, the A axis rotation assembly is used to drive a swing head (1) mounted with a tool to perform rotary motion, and
when an axis of the swing head (1) is parallel to a plane where the tool disc (2) is located, or is in the plane where the tool disc (2) is located, the axis of the swing head (1) is parallel to or coincides with a linear axis of the tool disc.

2. The blade disc machining center tool magazine according to claim 1, wherein
the T2 axis rotation assembly is arranged on a tool magazine base (3), the tool magazine base (3) is arranged on one side of a bed (4), another side of the bed (4) is provided with a column (5) capable of moving along a Z axis, a saddle (6) capable of moving along a Y axis is provided on the column (5), the A axis rotation assembly is provided on the saddle (6), a workbench (7) is provided on the bed (4), the workbench (7) is arranged on the same side of the tool magazine base (3),
the tool magazine base (3) has a mounting bevel, and the T2 axis rotation assembly is arranged on the mounting bevel, and is capable of moving along the mounting bevel.

3. The blade disc machining center tool magazine according to claim 2, wherein
the T2 axis rotation assembly includes a tool disc rotation fixed seat (8), the tool disc (2) and a tool disc rotating motor (9), the tool disc rotation fixed seat (8) is mounted on the mounting bevel, the tool disc (2) is rotatably mounted on the tool disc rotation fixed seat (8), the tool disc rotating motor (9) is fixed to the tool disc rotation fixed seat (8) through a motor seat (10), the tool disc (2) is coaxially fixed with a driven gear (11), the driven gear (11) is meshed with a driving gear (12), and the tool disc rotating motor (9) is transmission-connected to the driving gear (12).

4. The blade disc machining center tool magazine according to claim 2, wherein
the T1 linear axis assembly includes a drive motor and a guide rail (13) arranged on the mounting bevel, the drive motor is connected to the T2 axis rotation assembly through a lead screw and a nut, and the T2 axis rotation assembly is mounted on the guide rail (13) through a slider.

5. The blade disc machining center tool magazine according to claim 3, further comprising:
a detection switch bracket (14), wherein
one end of the detection switch bracket (14) is fixed to the tool disc rotation fixed seat (8), another end of the detection switch bracket (14) is provided with a detection switch (15), and the detection switch (15) faces a tool provided on the tool disc (2).

6. The blade disc machining center tool magazine according to claim 1, wherein
the T2 axis rotation assembly includes the tool disc (2), the tool disc (2) is circumferentially provided with a tool clamp (16) for clamping a tool, an axis of the tool intersects perpendicularly with an axis of the tool disc (2), and the tool clamp (16) clamps the tool on both sides of an axial direction of the tool disc (2).

7. The blade disc machining center tool magazine according to claim 1, wherein
an angle a between a T1 axis and a horizontal direction is 30°, 45° or 60°.

8. A blade disc machining center tool changing method utilizing the blade disc machining center tool magazine according to any one of claims 1 to 7, the blade disc machining center tool changing method comprising:
S1. moving the column along the Z axis, moving the saddle along the Y axis, and driving the swing head to rotate by the A axis rotation assembly so that the axis of the swing head to be mounted with the tool intersects perpendicularly with the axis of the tool disc and is coplanar with the axis of the tool;
S2. rotating the tool disc by the T2 axis rotation assembly so that the axis of the tool to be grabbed coincides with the axis of the swing head;
S3. moving the T2 axis rotation assembly along the T1 axis so that the swing head grabs the tool; and
S4. moving the column along the Z axis to separate the tool from the tool disc.

9. A blade disc machining center tool changing method utilizing the blade disc machining center tool magazine according to any one of claims 1 to 7, the blade disc machining center tool changing method comprising:
S1. moving the column along the Z axis, moving the saddle along the Y axis, and driving the swing head to rotate by the A axis rotation assembly so that the axis of the swing head mounted with the tool intersects perpendicularly with the axis of the tool disc and a distance between the axis of the swing head and the tool disc is greater than a distance between a tool installation opening on the tool disc and the tool disc;
S2. rotating the tool disc by the T2 axis rotation assembly so that an axis of the tool installation opening on the tool disc is parallel to the axis of the swing head;
S3. moving the T2 axis rotation assembly along the T1 axis so that the tool installation opening on the tool disc is aligned with the tool on the swing head;
S4. moving the column along the Z axis to load the tool into the tool disc; and
S5. releasing the tool from the swing head and moving the T2 axis rotation assembly along the T1 axis to separate the tool from the swing head.
